# EUROPEAN PATENT APPLICATION

(11) **EP 0 989 393 A2**
(43) Date of publication of application: **29.03.2000**
(21) Application number: 99307360.0
(22) Date of filing: 16.09.1999
(51) Int. Cl.: G01K 7/02

(54) **Thermocouple and method of manufacture**

(30) Priority: 24.09.1998 GB 9820852
(71) Applicant: SOLARTRON GROUP LIMITED, Farnborough, Hampshire GU14 7PW (GB)
(72) Inventor: Stansfeld, James Wolryche, Alton, Hampshire (Hants) GU34 4AN (GB)
(74) Representative: Vleck, Jan Montagu

(57) **Abstract**

A thermocouple device having a thermocouple cable (10) in the form of a twisted loop and including an elecrically conductive wire of two different materials jointed to form a thermojunction. A continous metal sheath surrounds the wire and is separated therefrom by a mineral insulator.

## Description

The present invention relates to a thermocouple and to a method of manufacturing a thermocouple, and is concerned particularly, although not exclusively, with a mineral-insulated concentric thermocouple, and with a manufacturing method therefor.

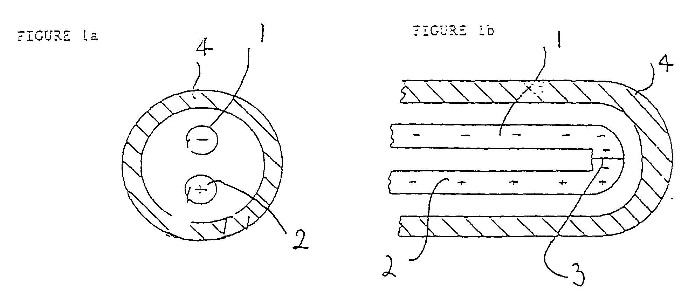

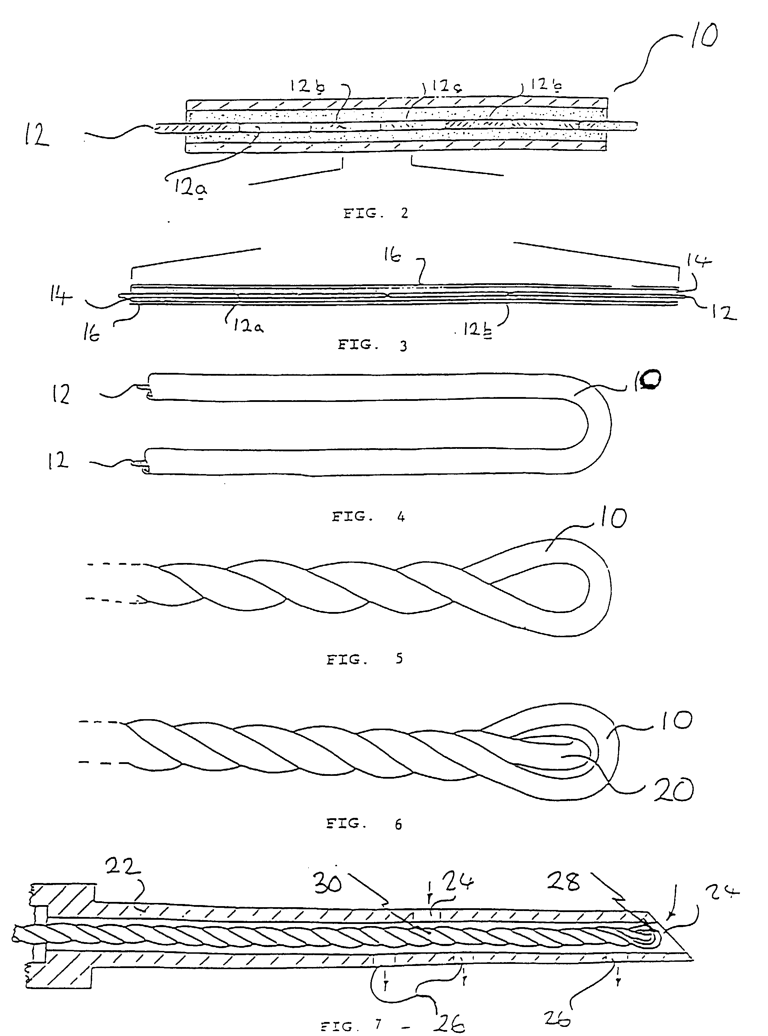

Conventional thermocouple elements or probes for temperature measurement (see Figure 1) are typically formed by two wires ("thermocouple wires") of different materials joined at one end to form a temperature sensitive thermocouple junction or thermojunction. The other ends of the wires are connected to a measurement system which includes a reference junction and measurement circuit. Normally the two wires are housed within a protective metal sheath which is separated from the joined wires by an electrical insulant such as a metal oxide e.g. (Magnesium oxide, berullium oxide or aluminium oxide). Such thermocouple probes are illustrated, for example, in US 4,467,134.

Such conventional thermocouples are typically made by forming a cable comprising a metal sheath encapsulating two essentially parallel thermocouple wires held within a metal oxide insulant, cutting the cable to a desired length, cutting into one end of the cable to uncover an end of each of the pair of thermocouple wires, welding together the uncovered ends of the thermocouple wires so as to join them to form a thermojunction, and then sealing the end of the cable by a closure weld so as to form a thermocouple element with a thermojunction inside and electrically insulated from a closed metal sheath.

For certain applications in hostile environments such as the measurement of temperature in aircraft engines or gas turbines, thermocouple probes are required to have high reliability and a long working life, not least in order to minimise the expense and time taken to replace such components.

Thermocouple probes for use in such hostile environments typically have to withstand high temperatures and high levels of vibration.

In addition, there is often a need for them to measure accurately and to have fast thermal response for engine health monitoring and control purposes. There is also a need for these probes to be easy to manufacture and of low cost.

Failures in thermocouples usually occur in the thermocouple wires adjacent to the thermojunctions or else in the insulating material which separates the wires from each other and from the protective sheath, or in the protective sheath itself. Often these failures result from contamination introduced during the manufacturing process and prior to failure this contamination can cause loss of measurement accuracy.

One method of improving reliability and length of working life is to use larger diameter thermocouple wires, thicker insulation and a thicker walled thermocouple sheath. However, this results in a thermocouple of slower thermal response - the response time of a thermocouple cable generally varies as the square of the cable diameter.

It has been proposed to improve reliability by using an arrangement which eliminates the need to break into the thermocouple cable in order to make the thermocouple junction and also eliminates the need for a closure weld.

A. Thomson and A.W. Fenton proposed (see Inst.Phys.Conf.So. No.26 1975: Chapter 4, pages 195 to 202) using a single core concentric cable in which the thermocouple wire changes along its length at a junction point from e.g. NiCr to NiAl (or similar). The insulated sheathed cable is then bent in a hairpin manner to place the thermojunction at the bend to form a sensing tip. By avoiding the difficult weld operations at the sensing tip, a major potential source of contamination was eliminated. This would not only improve the reliability of the junction but thereafter enable it to achieve better measurement performance for a longer period of time. In addition and by not having a material discontinuity in the sheath in this critical area, the sheath is better able to withstand the oxidation and corrosive effects in the measurement environment.

However, the single wire co-axial thermocouple element proposed by Thomson and Fenton in their 1975 paper, suffers from a number of problems which prevents its adoption for aero engine type applications.

These include:
(a) the thermocouple as shown is a flimsy element and is likely to be damaged by the vibrations which are present in aircraft engines.
(b) the bent thermocouple as shown, would require too much space within an aircraft engine for it to be practical.

The inventor of the subject application is the first to appreciate that a robust, small and largely self-supporting single-wire concentric thermocouple probe can be easily and relatively inexpensively produced without the contamination problems of the conventional twin-wire thermocouple probes.

When compared to the twin wire thermocouple arrangement, the single wire concentric design results in a thermocouple cable of substantially smaller diameter if still using wire, insulation and sheath of the same material thickness. It follows that, if the twin wire design offers an adequate thermal response, the thickness of materials in the single wire concentric design can be increased to give the same overall cable thickness and thereby further increase the reliability and length of working life of the probe.

In accordance with one aspect of the present invention there is provided a thermocouple device as defined in claim 1 to which reference should now be made.

The inventor is the first to realise that the combination of a single thermocouple wire of two different thermoelectric materials placed end to end and the bending and twisting of the cable into a twisted loop overcomes the poor reliability problems of the conventional twin-wire thermocouples and the flimsy, frail and bulky nature of the previously proposed but never commercially implemented bent co-axial or concentric single-wire cable thermocouple. The present invention results in a strong, robust, small and reliable thermocouple probe which is particularly useful in hostile environments.

The invention also provides methods as defined in independent claims 12 and 13 to which reference should now be made.

Preferred features of the different aspects of the invention are described in the dependent claims 2 to 11 and 14 to 18 to which reference should now be made.

Whereas a single twisted thermocouple cable might be used for many applications, there are advantages in having to a dual cable device where the thermocouple wires are simply connected in parallel. Firstly, if the two cables are arranged so that both have their thermojunctions at the same place - e.g. at their tips - then, being of the same length, diameter and materials, they have the same electrical resistance and have conduction paths which pass through the same environments. They will therefore both give the same reading of temperature. Having two cables, which together occupy little more space than one cable, means that the failure of both cables must take place before the probe fails to be operational. This safeguard may be important in certain operating environments and where high measurement reliability is required.
Furthermore, if one cable has its thermojunction at a first position in the probe and another has its thermojunction at a different position in the probe, it is possible to make measurements of average temperature, e.g. in an aircraft engine. For such an arrangement, it is advantageous to make or provide a cable in which the diameters of the two thermocouple wires are selected such that after extrusion they offer the same electrical resistance per unit length. The results of such an arrangement is that any two cables of the same length will have the same end to end resistance irrespective of the positions of the two thermojunctions. Consequently, there is no need to incorporate an external compensating resistor as has previously been necessary to match or balance the resistance of the separate cables. This is an advantage since the use of an external resistor, often at a different location and therefore in a different thermal environment, gives rise to inaccuracies in measurement. Also, the intimate physical juxtapositioning of the twisted cables means that the circuit remains balanced even when there is a substantial temperature gradient along the length of the probe.

A benefit of the method of manufacture of the coaxial cable as described above is that, since many thermocouple elements (i.e. sections with a single thermocouple junction) can be made from a single extruded length of thermocouple cable, the method may allow the manufacture of less expensive thermocouple elements. Additionally, from one extruded length of thermocouple cable, there is good uniformity of performance between each of the resultant thermocouple elements, since they are all made of the same materials and in the same environment. This greatly simplifies the manufacture of multiple element assemblies where performance matching between individual elements is necessary.

Whilst the cable, being of coaxial single wire construction is smaller in diameter and therefore enjoys a faster thermal response time, the twisted structure provides the strength needed to withstand harsh operational environments. Previously this has been possible only by increasing the cable diameter with the attendant deterioration of response time.

If the design and application dictate that the diameter of the thermocouple wire, the thickness of insulation and the wall thickness of the sheath be the same as for a known twin wire thermocouple arrangement, the resultant overall diameter of the single wire coaxial arrangement will be less. This will result in the coaxial arrangement having a substantially faster thermal response time.
Alternatively, if the response time of the known twin wire arrangement is adequate, the thickness of materials used on the coaxial design can be increased to give it longer life.

A further benefit is that the twisted cable structure is inherently vibration damped. It is also an effective means of holding together two or more thermocouple elements and provides a non-rigid support mechanism if the elements are to be held within a probe housing.

The present invention may be carried into practice in various ways but embodiments will now be described by way of example only with reference to the accompanying drawings in which:
Figures 1a and 1b in radial and axial section respectively, illustrate a conventional twin wire thermocouple probe;
Figure 2 shows in axial cross section a portion of thermocouple cable at an early production stage, in accordance with an embodiment of the present invention,
Figure 3 shows an element from the cable of Figure 2 in axial cross section at a later production stage,
Figure 4 shows a thermocouple cable bent in accordance with an embodiment of the invention,
Figure 5 shows the cable of Figure 4 in twisted configuration,
Figure 6 shows two cables in twisted configuration in accordance with another embodiment of the invention and,
Figure 7 shows a thermocouple probe including the cables of Figure 6.

As described above and shown in Figures 1, 1(a) and 1(b) conventional thermocouple probes comprise two thermocouple wires or conductors 1, 2 of different thermoelectric materials; For example NiCr and N.AL wires are commonly used as the two different thermolectric materials. These wires are welded together to form a junction 3 (the "thermojunction") and are held within a metal sheath 4 from which they are separated by an insulant (e.g. Magnesium Oxide).

Referring to Figure 2, this shows a thermocouple cable 10 embodying the invention at an early production stage, prior to extrusion. The cable comprises a central electrically conductive wire 12 which alternates along its length between shorter lengths of NiCr and NiAl (12a and 12b respectively) which have been butt-welded together at their ends so forming a series of junction points between the shorter lengths which will become thermojunctions in the finished thermocouple. The lengths of NiCr and NiAl thermocouple wire may easily be welded together in a clean environment, free from potentially harmful contaminants. The relative diameters of the connected thermocouple wires of different materials may be selected so that, after extrusion, the electrical resistance per unit length is the same.

This arrangement ensures that any two thermocouple cables of the same length will have the same end to end electrical resistance irrespective of the position of the thermojunction. This reduces or eliminates the need for the external compensating resistor typically required when joining such elements in parallel as is often needed for average temperature measurement or to safeguard measurement against the failure of any one element.

Surrounding the wire 12 is a layer 14 of granular magnesium oxide insulating material. Around the insulating material is a coaxial tube 16 of high-temperature steel.

The cable is then extruded down to the required diameter and is cut into suitable lengths, midway between adjacent junctions to give the structure shown in Figure 3. The ends of each length are sealed to ensure that no harmful contaminant enters the cable.

The cable is then bent in two, as shown in Figure 4, so that the thermojunction (not shown) where the NiCr meets the NiAl becomes located at the tip of the resultant hairpin loop, the free ends of which will be connected to temperature measuring circuitry (not shown). The loop of cable is then carefully twisted to take the form shown in Figure 5. The thermocouple wires 12 are held within a continuous sheath or tube 16. The sheath or tube 16 is of a uniform material of good oxidation resistance and has no discontinuities along its length. In particular its tip is of the same material as the rest of its length and includes no discontinuity arising from, say, the need in the prior art twin-core or twin-wire thermocouples to open up and then seal the cable tip near the thermojunction

It will be noted from the above discussion that (a) the thermocouple junctions are formed prior to the cable extrusion process and are encapsulated within the sheath as part of the extrusion process; (b) the insulating material is homogeneous throughout the entire length of the cable including the sensitive junction area; (c) the sheath is of a homogeneous material of good oxidation resistance throughout the entire length of the cable and does not contain any joins or welds which could be the source of oxidation or corrosion; and (d) the cable is bent and twisted to form a probe which is better able to tolerate the vibrations in the application environment.

The method described is less vulnerable to contamination then the known methods.

Figure 6 shows two cables 10 and 20 of the same length which have been bent and twisted together. Their tips are adjacent and the cables themselves are intimately close along their lengths.

Figure 7 shows the dual cable of Figure 6 in a thermocouple probe comprising a rigid thermocouple housing 22 having inlets 24 and outlets 26 to allow fluid to pass over the thermocouple cable.

Such a probe might be used in an aircraft engine where, for example, hot exhaust gases are allowed into the housing to enable accurate determination of their temperature using the thermoelectric effect. In the example of Figure 7 one of the cables has a thermojunction at its tip 28 and the other has a thermojunction at an intermediate point along its length.

## Claims

1. A thermocouple device comprising a thermocouple cable which includes an electrically conductive wire having a first part of a first thermoelectric material and second part of a second thermoelectric material having a different thermoelectric coefficient to that of the first thermoelectric material, a thermojunction being formed at the junction between the two parts , a continuous sheath surrounding and spaced from the wire, and electrically insulating material between the sheath and the wire, wherein the cable is arranged in the form of a twisted loop.

2. A device according to claim 1 wherein the electrically insulating material extends throughout the entire length of the sheath and insulates this from the wire.

3. A device according to any preceding claim wherein the thermojunction is located substantially at the tip formed at the bend of the twisted loop, wherein each side of the thermojunction is electrically connectable to external circuitry via the free ends of the loop.

4. A device according to any of the preceding claims wherein the dimensions of each part of the wire are selected so as to give the same electrical resistance per unit length through the length of the thermocouple cable.

5. A device according to any of claims 1 to 4 comprising two thermocouple cables each formed as a twisted loop.

6. A device according to Claim 5 wherein the two cables are inter-twined to form two twisted loops intimately close along their length.

7. A device according to Claim 5 or claim 6 wherein both cables are of substantially the same length.

8. A device according to any of Claims 5 to 7 wherein both cables have their thermojunctions at their respective tips.

9. A device according to any of claims 5 to 8 wherein one cable has its thermojunction at the tip formed at the bend of its respective twisted loop and the other cable has its thermojunction spaced from the tip formed at the bend of its respective twisted loop.

10. A device according to any of Claims 5 to 8 wherein both cables have their thermojunctions spaced from the tips formed at the bends of their respective twisted loops.

11. A device according to claim 10 wherein both cables have their thermojunctions spaced to a different extent from the tips formed at the bends of their respective twisted loops.

12. A method of manufacturing a thermocouple cable, the method comprising joining together alternate substantially equal lengths of first and second thermoelectric materials to form a continuous wire of alternating thermoelectric material, surrounding the wire with a coaxial layer of electrically insulating material, surrounding the layer of insulating material with a protective sheath to form a cable, extruding the cable down to a predetermined diameter and cutting the extruded cable at points along each of the said lengths to form shorter cables, each of which comprises a first thermoelectric material and a second thermoelectric material joined at a thermojunction.

13. A method of manufacturing a thermocouple device, the method comprising taking a portion of coaxial thermocouple cable having an electrically conductive thermocouple wire consisting of respectively first and second lengths of thermoelectric materials joined at ends thereof to form a thermojunction, a protective sheath surrounding and spaced from the wire and electrically insulating material between the sheath and the wire, the method comprising bending the cable to form a loop and then twisting the loop.

14. A method according to Claim 13 comprising bending the cable in the region of its thermojunction and twisting the cable so that the thermojunction becomes located substantially at the tip of the twisted loop.

15. A method according to Claim 13 or claim 14 comprising taking two cables of substantially the same length and bending them and twisting them together to form the device.

16. A method according to Claim 15 comprising taking the two cables, bending them both in the region of their thermojunctions and twisting them together so that the thermojunctions of both cables become located at the tips of the respective loops.

17. A method according to Claim 15 comprising bending the cables so that the thermojunction of one is formed at the tip of the respective loop and the thermojunction of the other is formed at a position spaced from the tip of the respective loop.

18. A method according to Claim 15 comprising bending the cables so that the thermojunctions of both are formed at positions spaced from the tips of their respective loops.
